# EUROPEAN PATENT SPECIFICATION

(11) **EP 4 480 719 B1**
(45) Date of publication and mention of the grant of the patent: **11.03.2026**
(21) Application number: 24182729.4
(22) Date of filing: 18.06.2024
(51) Int. Cl.: B60C 11/24, B60C 23/04, G01B 7/06, B60C 19/00

(54) **DETECTION OF UNEVEN OR IRREGULAR TREADWEAR**
ERKENNUNG VON UNEBENEN ODER UNREGELMÄSSIGEN LAUFFLÄCHENABZÜGEN
DÉTECTION D'USURE IRRÉGULIÈRE OU IRRÉGULIÈRE

(30) Priority: 19.06.2023 US 202363508955 P; 18.04.2024 US 202418638925
(43) Date of publication of application: 25.12.2024
(73) Proprietor: The Goodyear Tire & Rubber Company, Akron, OH 44316 (US)
(72) Inventor: ZHAO, Junling, Hudson, 44236 (US); SUH, Peter Jung-min, Copley, 44321 (US); WEST, Jeffrey McKay, Uniontown, 44685 (US); KESTNER, Michael William, Canton, 44708 (US)
(74) Representative: Kutsch, Bernd

(56) References cited:
- EP-A1- 3 599 113
- CN-A- 103 303 073
- DE-A1- 102017 218 949
- DE-A1- 102018 203 373
- DE-A1- 19 930 046
- DE-A1- 2 524 463
- ES-U- 1 296 814
- KR-A- 20150 017 515
- US-A1- 2023 182 510

## Description

### BACKGROUND

In the manufacture of a pneumatic tire, the tire is typically built on the drum of a tire-building machine, which is known in the art as a tire building drum. Numerous tire components are wrapped about and/or applied to the drum in sequence, forming a cylindrical-shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

As tires are used on a vehicle, the rubber in the tread gradually breaks away causing the tread to become shallower and decreasing overall tire performance. When the tread is too shallow, the tire may become unsafe in certain driving conditions. For example, shallow tread decreases traction in wet or icy conditions. Further, shallow tread may impact braking distance and the likelihood of having a tire blowout. In addition to causing unsafe driving conditions, treadwear can be indicative of other issues with a vehicle. Uneven treadwear on a tire may indicate an improper alignment, overinflation, underinflation, or potentially an issue with the vehicle's suspension.

US 2023/0182510 A1 describes a tire in accordance with the preamble of claim 1 or 2, respectively.

DE 10 2017 218 949 A1, EP 3 599 113 A1 and CN 103 303 073 A describe a filament embedded in a tire tread and electrically connected to a sensor.

Further tires having a conductive filament in its tread are known from DE 10 2018 203 373 A1, DE 199 30 046 A1, ES 1 296 814 U, KR 2015 0017515 A and DE 25 24 463 A1.

### SUMMARY OF THE INVETION

The invention relates to a tire in accordance with claim 1 or 2 respectively, and to a method in accordance with claim 10.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1 is a drawing of a vehicle with one or more tires that include a treadwear sensor according to various embodiments of the present invention.
FIG. 2 is a perspective cross-sectional view of a tire shown in FIG. 1 according to various embodiments of the present invention.
FIG. 3A is an enlarged schematic perspective view of a tire shown in FIG. 2 according to various embodiments of the present invention. FIG. 3B is a perspective view of a sensor employed in the exemplary embodiment of the tire with a treadwear sensor of FIG. 2 according to various embodiments of the present invention.
FIG. 4 is a partial cross-sectional perspective view of a portion of a tire of FIG. 1 including a treadwear sensor according to various embodiments of the present invention.
FIG. 5 is a partial cross-sectional perspective view of a portion of a tire of FIG. 1 including a treadwear sensor and a chimney according to various embodiments of the present invention.

### DEFINITIONS

"Axial" and "axially" mean lines or directions that are parallel to the axis of rotation of the tire.

"Axially inward" and "axially inwardly" refer to an axial direction that is toward the axial center of the tire.

"Axially outward" and "axially outwardly" refer to an axial direction that is away from the axial center of the tire.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Innerliner" means the layer or layers of elastomer or other material that form the inside surface of a tubeless tire and that contain the inflating fluid within the tire.

"Lateral" means an axial direction.

"Lateral edges" means a line tangent to the axially outermost tread contact patch or footprint as measured under normal load and tire inflation, the lines being parallel to the equatorial centerplane.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

"Tread element" or "traction element" means a rib or a block element defined by a shape having adjacent grooves.

### DETAILED DESCRIPTION OF PREFERRED EMBODIMENTS OF THE INVENTION

It is often desirable to collect electronic data for the wear state of a tire. The data can be communicated to electronic systems of the vehicle, such as vehicle stability and/or braking systems, in order to provide improved control of the vehicle and to monitor or track driving behavior. Mechanical tread wear indicators are not able to provide such data to electronic systems of the vehicle.

In addition, direct tire wear sensors are often difficult to install in the tire. Some direct wear sensors cannot withstand the harsh operating environment of the tire for a prolonged period, such as the recommended life of the tire. Other direct wear sensors are not capable of maintaining precise and repeatable indication of tire wear over the recommended life of the tire. Still other treadwear sensors are only capable of detecting wear in one area of the tread and cannot detect uneven and/or irregular wear.

Disclosed herein are various examples related to the development of a treadwear sensor for detecting uneven and/or irregular wear in the tread of a tire. A conductive filament can be included in the tread of a tire at a wear depth. Connecting the ends of the conductive filament to an electrically active sensor allows a current to flow through the conductive filament. When the tread has worn down to the wear depth, the conductive filament will break, and current will cease to flow through the sensor. The break in current can trigger an alert that the tire needs to be changed or retreaded. By extending the conductive filament across the width of the tread, uneven or irregular wear will also cause the conductive filament to break, tripping the sensor. In addition, the conductive filament can extend circumferentially around the tread, enhancing the coverage of the treadwear sensor. Reference will now be made in detail to the description of the embodiments as illustrated in the drawings, wherein like reference numerals indicate like parts throughout the several views.

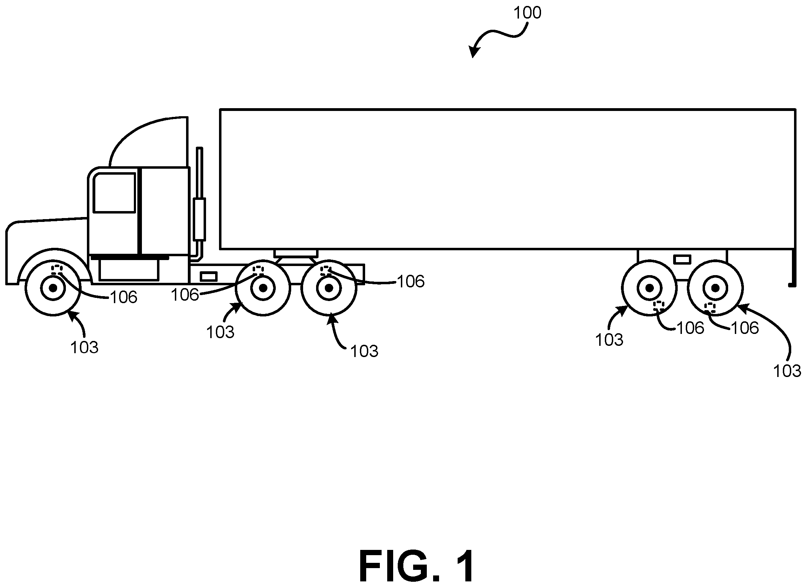

With reference to FIG. 1, a vehicle 100 is shown with one or more tires 103. Each tire 103 includes a partially embedded treadwear sensor 106. In some embodiments, the treadwear sensor 106 is a component of a tire pressure monitoring system (TPMS). In some aspects, each one of the tires 103 on the vehicle 100 includes one or more of the treadwear sensors 106. While the vehicle 100 is depicted as a commercial truck, the vehicle 100 may comprise any type of vehicle that employs tires where the commercial truck is presented as an example. To this end, the vehicle 100 may comprise other vehicles falling into various categories such as passenger vehicles, off-road vehicles, and the like, in which such vehicles include a greater or lesser number of tires 103 than are shown in FIG. 1.

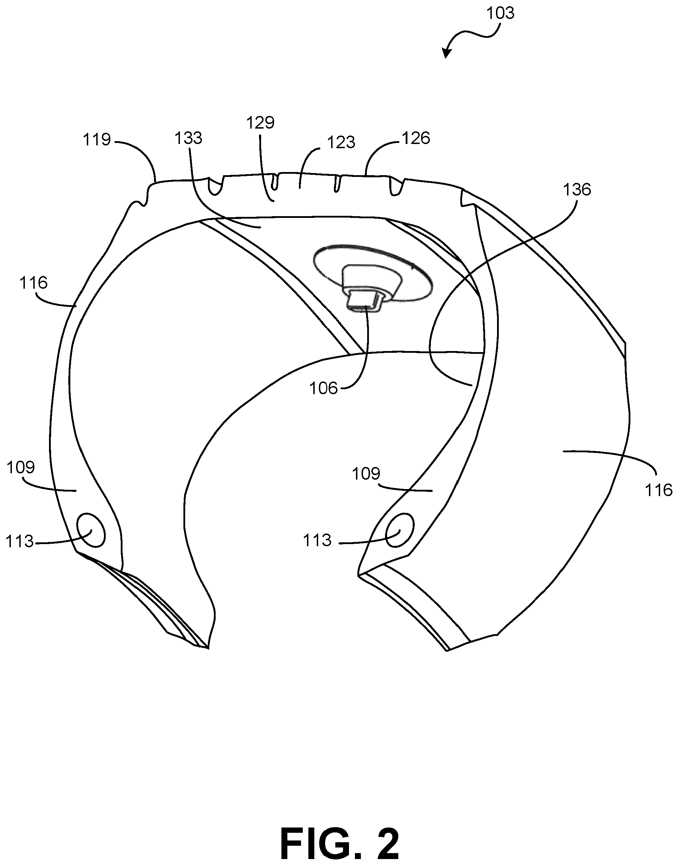

Turning to FIG. 2, shown is a cross-sectional view of the tire 103 according to various embodiments. The tire 103 includes a pair of bead areas 109, each one of which is formed with a bead core 113 that is embedded in the respective bead area 109. Each one of a pair of sidewalls 116 extends radially outwardly from a respective bead area 109 to a ground-contacting tread 119. The tread 119 is formed with multiple tread elements or tread blocks 123 and defines a radially outer surface 126. The tire 103 is reinforced by a carcass 129 that toroidally extends from one bead area 109 to the other bead area 109. An innerliner 133 is formed on the inner or inside surface of the carcass 129. The tire 103 is mounted on the flange of a wheel or rim forming an internal cavity 136.

According to one embodiment, a treadwear sensor 106 is mounted to and partially embedded in the tire 103. The treadwear sensor 106 detects the wear of the tread 119 of the tire 103 but may additionally include a pressure sensor to sense the inflation pressure within a cavity 136 of the tire 103, and/or a temperature sensor to sense the temperature of the tire 103 and/or the cavity 136 of the tire 103. In some embodiments, the treadwear sensor 106 is coupled to a commercially available tire pressure monitoring system (TPMS) module or other sensing unit.

In some aspects, the treadwear sensor 106 comprises a processor and memory to store tire identification (ID) information for each specific tire 103. For example, the tire ID may include manufacturing information for the tire 103, including the tire model; size information, such as rim size, width, and outer diameter; manufacturing location; manufacturing date; a treadcap code that includes or correlates to a compound identification; a mold code that includes or correlates to a tread structure identification, or other information. The tire ID may also include a service history or other information to identify specific features and parameters of each tire 103.

In some embodiments, the treadwear sensor 106 further includes an antenna for wirelessly transmitting measured parameters and tire ID data to a remote processor for analysis, such as a processor integrated into a vehicle electronic control unit and/or a Controller Area Network (CAN) bus associated with the vehicle 100.

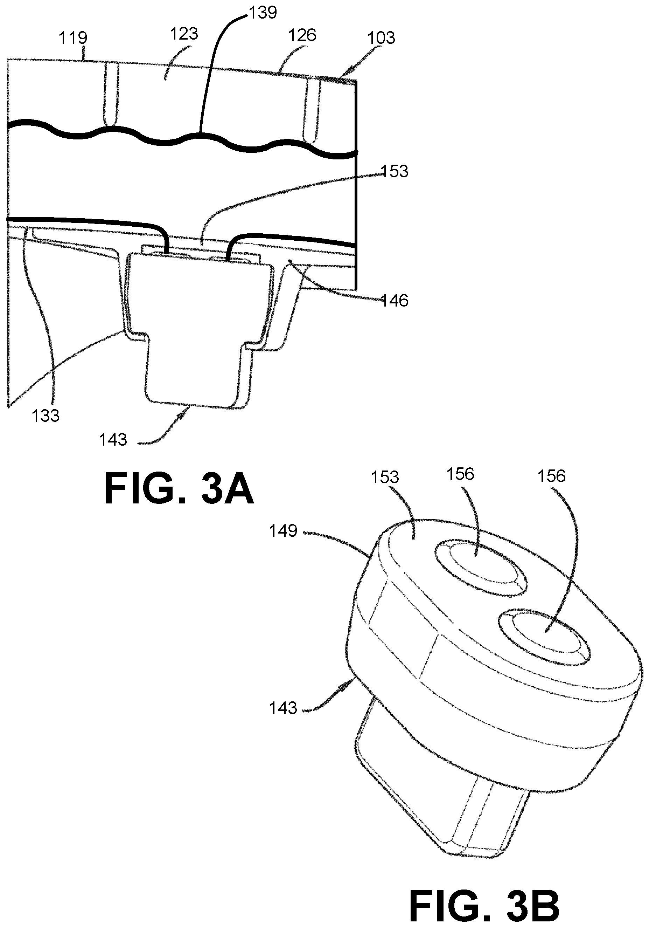

Turning to FIG. 3A, the treadwear sensor 106 may comprise a conductive filament 139 and a sensor unit 143 which is mounted to the tire 103 using a container 146. The container 146 receives the sensor unit 143 and is attached to the innerliner 133 by an adhesive, although the sensor unit 143 may be attached in some other manner or may be integrally molded as part of the innerliner 133 of the tire 103. Preferably, the container 146 is flexible and is formed of an elastomer or polymer. The conductive filament 139 is disposed in the tread 119 at a wear depth. The wear depth is a predetermined distance below the radially outer surface 126 of the tread 119, which may correspond to a minimum recommended tread depth. The conductive filament 139 includes a pair of ends, each of which terminates in a sensor contact. The conductive filament 139 may be a wire, a conductive polymer, a carbon fiber wire, or other conductive material.

As shown in FIG. 3B, the sensor unit 143 includes a rigid housing 149 formed with a base 153. A pair of electrical contacts 156 are mounted on the base 153 and extend through the housing 149. The sensor contacts at the ends of the conductive filament 139 can be attached to the electrical contacts 156 of the sensor unit 143. A continuous electrical circuit is formed by the conductive filament 139 and the connection of each sensor contact with each respective electrical contact 156 of the sensor unit 143. In some embodiments, an elastomeric connector may be positioned between the sensor contacts of the conductive filament 139 and the electrical contacts 156 to ensure a reliable electrical connection therebetween over time. Such elastomeric connectors are generally commercially available. Alternatively, an elastomeric connector may be employed to electrically couple some other electrical contacts associated with the sensor unit 143 other than the electrical contacts 156 to the sensor contacts. For example, various points on a circuit board that makes up part of the sensor unit 143 may be electrically coupled to the sensor contacts by way of an elastomeric connector. Such elastomeric connector may be compressed between various electrical contact points regardless of the material from which such electrical contact points are constructed. For example, the materials may comprise metal, carbon fiber, conductive rubber compositions, or other materials.

When the conductive filament 139 is attached to the sensor unit 143, an electrical current flows through the conductive filament 139. When the tread is worn to the wear depth, the conductive filament 139 is exposed and will break. The electrical current stops flowing through the conductive filament 139, and the treadwear sensor 106 can be configured to trigger an alert, such as a notification, a warning light, or some other alert.

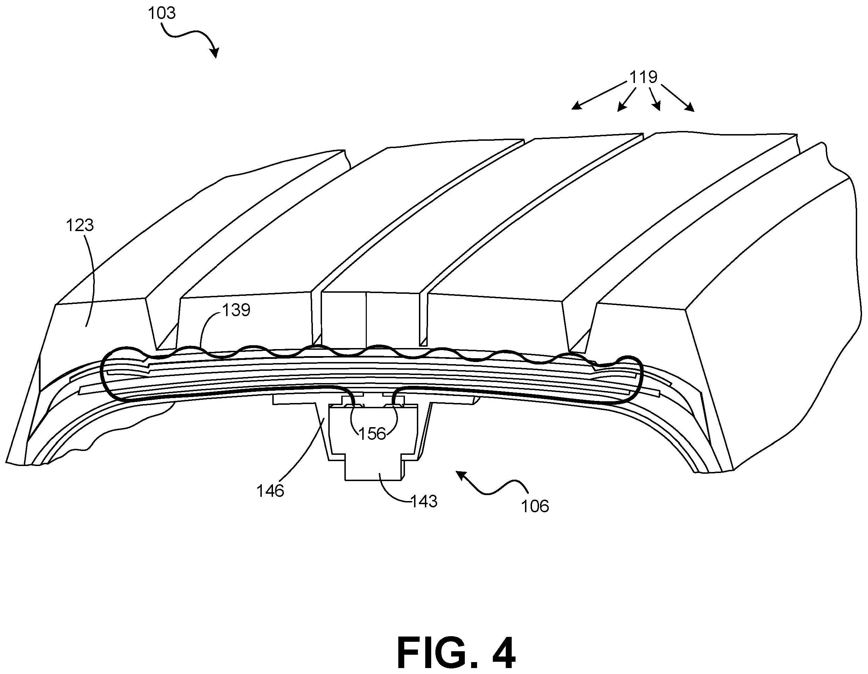

Referring to FIG. 4, shown is a cross-sectional view of a portion of a tire 103 according to various embodiments. The tire 103 includes a tread 119 comprising multiple tread elements 123. The tread 119 is positioned adjacent to, and radially outward relative to, an undertread 159. The tire 103 includes a carcass 129 and an innerliner 133, along with other components as can be appreciated. The tire may also include a treadwear sensor 106. The treadwear sensor 106 extends through the various components of the tire, with a sensor unit 143 being attached to the innerliner 133 of the tire 103 and a conductive filament 139 disposed within the tread 119. The conductive filament 139 is arranged in a wave-like pattern to provide additional flexibility. Although the conductive filament 139 is shown in FIG. 4 as being disposed beneath the tread elements 123, it is understood that the conductive filament 139 may run through multiple tread elements 123. Additionally, although the conductive filament 139 is shown in FIG. 4 as extending through the tread 119 in a lateral direction, it is understood that, in some embodiments, the conductive filament 139 extends through the tread 119 in a circumferential direction around the tire 103.

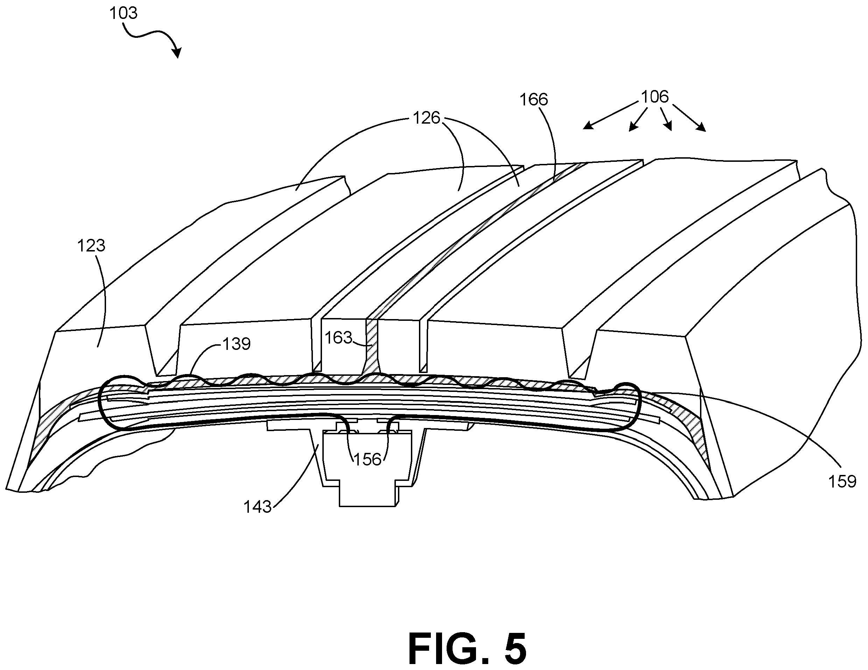

Referring next to FIG. 5, shown is a cross sectional view of a portion of a tire 103 according to various embodiments. The tire 103 may include a chimney 163 that extends from the undertread 159 to the radially outer surface 126 of the tire 103 defined by the tread 119. The chimney 163 includes a chimney outer surface 166 that is generally flush with the radially outer surface 126 of the tire 103 and respective tread elements 123 in which the chimney 163 is disposed. Although the chimney 163 is shown in FIG. 5 as positioned within a single tread element 123, it is understood that the chimney 163 may run through multiple tread elements 123.

When the tire 103 is installed on a vehicle 100, the chimney 163 establishes a conductive pathway from the conductive undertread 159 to the ground upon which the vehicle 100 travels. In this respect, the ground includes all elements upon which a vehicle may travel including pavement, cement, steel (bridges), dirt, rocks, or any other elements as can appreciated. As such, the term ground as contemplated herein refers to an electrical ground as well as a physical ground upon which a vehicle rests. The tire 103 includes a conductive pathway established with conductive materials from the hubs of a vehicle 100 through the sidewalls 116 to the undertread 159. The chimney 163 completes the circuit by providing a conductive pathway from the undertread 159 to the terrestrial medium upon which the vehicle travels.

As a given vehicle 100 travels, it is common to acquire a static charge relative to ground. The chimney 163 provides a conductive pathway through the tread 119 through which such a static charge can be discharged to ground. This prevents the buildup of large static charges in the vehicle 100 relative to the ground. The lateral position of the chimney 163 may vary depending on the locations of the tread elements 123 of a given tire 103. In one embodiment, the chimney 163 is located at a lateral position on the tread 119 so as to maximize the contact between the outer surface of the chimney 163 and the ground. In one embodiment, the chimney 163 may be positioned so that a center of the chimney 163 coincides with an equatorial plane of the tire 103.

The tire 103 includes a predefined minimum tread depth. As a tire 103 is put into service on a vehicle 100 over time, the tread 119 will wear down. The predefined minimum tread depth is a minimum recommended tread depth at which the tire 103 can be placed into service. Once the tread 119 wears below the predefined minimum tread depth, then the tire 103 should be taken out of service. The tread 119 of the tire 103 thus includes a sacrificial portion that is expected to wear away over time while the tire 103 is in service. The conductive filament 139 is positioned at a predefined depth with respect to the outer surface of the tread element 123 of the tread 119. In one embodiment, this conductive filament 139 is positioned within the sacrificial portion of the tread 119 such that when the entire radially outermost portion is worn away, the continuity of the conductive filament 139 is compromised and detected by the sensor unit 143.

As such, the conductive filament 139 may be positioned at any depth in the tread 119 so as to detect wear of the tread 119 at various heights. In one embodiment, the conductive filament 139 is positioned relative to the predefined minimum tread depth such that when the conductive filament 139 has worn away, the tread 119 will have been worn down to the predefined minimum tread depth. The sensor unit 143 can thus detect when the tire 103 has reached maximum wear and should be taken out of service.

That is, when the tread 119 wears down to the conductive filament 139, the conductive filament 139 breaks, creating a break in the electrical circuit formed by the conductive filament 139 and each sensor contact with each respective sensor unit electrical contact 156. The sensor unit 143 detects the break in the electrical circuit and can wirelessly transmit a notice that the electrical circuit has broken and/or that a predefined minimum tread depth has been reached. The notice transmitted by the sensor unit 143 may be sent to a remote processor, such as a processor that is integrated into a vehicle electronic control unit, CAN bus, and/or a cloud-based server. The notice, by communicating that the minimum tread depth has been reached, thus indicates when replacement or retreading of the tire 103 should take place.

In this manner, the tire 103 with the treadwear sensor 106 indicates tire wear with components that are mounted within the tire 103 and does not require sensors that are external to the tire. The tire 103 with the treadwear sensor 106 provides a direct wear sensor system for a vehicle tire 103 that includes a structure which is easy to install in the tire 103, withstands the operating environment of the tire 103, accurately indicates tire wear in a repeatable manner, is capable of detecting irregular tread wear, and is capable of transmitting a wear indication to an electronic control system of the vehicle 100.

The present invention also includes a method of determining wear of a tire using a treadwear sensor 106, and a method of forming a tire with a treadwear sensor 106 for indicating tread depth. Each method includes steps in accordance with the description that is presented above and shown in FIGS. 1 through 5.

For example, a method for manufacturing a tire may include attaching a conductive filament 139 to an uncured tire carcass 129. The conductive filament 139 has a pair of ends extending through the uncured tire carcass 129 to an innerliner 133, the pair of ends terminating into a corresponding pair of sensor contacts. Next, the method may include layering a tread cap on the uncured tire carcass 129 over the conductive filament 139. Finally, the method includes curing the uncured tire carcass 129 to produce a cured tire 103.

In some embodiments, the method may further include attaching the conductive filament 139 to the uncured tire carcass 129 using an adhesive. In some embodiments, the conductive filament 139 is attached to the uncured tire carcass 129 by stitching the conductive filament 139 into the uncured tire carcass 129.

The method may further include the step of attaching a sensor to the innerliner 133 of the cured tire 103. The sensor has a pair of electrical contacts 156, each of the electrical contacts 156 being in electrical contact with a corresponding one of the sensor contacts. In some embodiments, the method further includes electrifying the sensor such that an electrical current flows from the sensor contacts through the conductive filament 139.

In some embodiments, the method further includes the step of attaching a plurality of conductive filaments 139 to an uncured tire carcass 129. The method may additionally include positioning the plurality of conductive filaments 139 around a circumference of the uncured tire carcass 129.

It is to be understood that the structure of the above-described tire 103 with a treadwear sensor 106 may be altered or rearranged, or components or steps known to those skilled in the art omitted or added, without affecting the overall concept or operation of the various embodiments. For example, a single treadwear sensor 106 may be disposed in the tread 119 of the tire 103, or multiple treadwear sensors 106 may be disposed in the tread 119 about the tire 103. In addition, the treadwear sensor 106 may be inserted into the tread element 123 before or after curing of the tire 103. Furthermore, the treadwear sensor 106 may include multiple conductive filaments 139, each one having a distal end spaced apart from the other wires, which enables the treadwear sensor 106 to indicate different wear states of the tread 119, without affecting the overall concept or operation of the various embodiments. In such case, each individual one of such conductive filaments 139 may be placed at various positions on a given tread 119 of the tire 130.

It is understood that in some embodiments, it is not necessary that at least one conductive filament 139 falls within the footprint of the tire 103 at any given time. That is to say, a lesser number of conductive filaments 139 may be employed where a given conductive filament 139 falls within the footprint of a tire 103 as the tire 103 rotates, where a period of time exists between when a given conductive filament 139 leaves the footprint and another conductive filament 139 enters the footprint. Indeed, in one embodiment, a given tire 103 may only include a single conductive filament 139.

## Claims

1. A tire comprising an innerliner (133) adjacent to a belt package, an undertread adjacent to the belt package opposite the innerliner, a tread (119) adjacent to the undertread opposite the belt package, the tread (119) comprising a plurality of tread elements, a conductive filament (139) disposed laterally within the tread, the conductive filament having a pair of ends extending through the undertread and the belt package to the innerliner (133), the pair of ends terminating into a corresponding pair of sensor contacts, and a sensor (143) adjacent to a radially inward side of the innerliner, the sensor (143) having a pair of electrical contacts (156), each one of the pair of electrical contacts being in electrical contact with a corresponding one of the sensor contacts **characterized in that** the conductive filament (139) is arranged in a wave-like pattern through the tread (119) in a lateral direction.

2. A tire comprising a conductive filament (139) disposed in a tread (119) of the tire (103), the conductive filament (139) extending laterally across a width of the tread and a pair of ends extending radially inward through the tire to an innerliner (133) of the tire; a pair of sensor contacts attached to the conductive filament (139), each of the pair of sensor contacts being attached to a respective one of the pair of ends of the conductive filament; and a sensor (143) adjacent to a radially inward side of the innerliner (133), the sensor (143) having a pair of electrical contacts (156), each one of the pair of electrical contacts being in electrical contact with a corresponding one of the sensor contacts, **characterized in that** the conductive filament (139) is arranged in a wave-like pattern through the tread (119) in a lateral direction.

3. The tire of claim 1 or 2, wherein the conductive filament (139) is disposed at a wear depth within the tread (119) such that the conductive filament is broken when the tread is worn to the wear depth.

4. The tire of at least one of the previous claims, wherein the conductive filament (139) comprises a conductive polymer and/or carbon fiber.

5. The tire of at least one of the previous claims, wherein the conductive filament (139) comprises a metal wire.

6. The tire of at least one of the previous claims, further comprising a chimney (163) extending from the undertread through at least one of the plurality of tread elements.

7. The tire of at least one of the previous claims, wherein the sensor (143) is a TPMS sensor.

8. The tire of at least one of the previous claims, wherein the wear depth corresponds to a predefined minimum tread depth of the tire (103) with respect to an outer surface of the tread (119) such that the conductive filament is broken when the tread is worn to the wear depth.

9. The tire of at least one of the previous claims, wherein the conductive filament (139) extends through the tread (119) in a circumferential direction around the tire, a radial direction through the tire, or a combination thereof.

10. A method for manufacturing a tire, the method comprising:
attaching a conductive filament (139) to an uncured tire carcass, the conductive filament having a pair of ends extending through the uncured tire carcass to an innerliner (133), the pair of ends terminating into a corresponding pair of sensor contacts;
layering a tread cap on the uncured tire carcass over the conductive filament (139); and
curing the uncured tire carcass to produce a cured tire.

11. The method of claim 10, wherein attaching the conductive filament (139) to the uncured tire carcass comprises using an adhesive; and/or wherein attaching the conductive filament to the uncured tire carcass comprises stitching the conductive filament (139) into the uncured tire carcass.

12. The method of claim 10 or 11, further comprising attaching a sensor (143) to the innerliner (133) of the cured tire, the sensor having a pair of electrical contacts (156), each one of the pair of electrical contacts being in electrical contact with a corresponding one of the sensor contacts.

13. The method of at least one of the claims 10 to 12, further comprising electrifying the sensor (143) such that an electrical current flows from the sensor contacts through the conductive filament (139).

14. The method of at least one of the claims 10 to 12, further comprising attaching a plurality of conductive filaments to an uncured tire carcass, each of the plurality of conductive filaments having a pair of ends extending through the uncured tire carcass to an innerliner, the pair of ends terminating into a corresponding pair of sensor contacts, wherein the method optionally further comprises positioning the plurality of conductive filaments at even intervals around a circumference of the uncured tire carcass.

## Patentansprüche

1. Reifen, der die folgenden Elemente umfasst: eine Innenschicht (133), die angrenzend an ein Gürtelpaket angebracht ist; ein Protektorunterteil, das angrenzend an das Gürtelpaket gegenüber der Innenschicht angebracht ist; eine Lauffläche (119), die angrenzend an das Protektorunterteil gegenüber dem Gürtelpaket angebracht ist; wobei die Lauffläche (119) die folgenden Elemente umfasst: eine Anzahl von Laufflächenelementen; ein leitfähiges Filament (139), das in seitlicher Richtung innerhalb der Lauffläche angebracht ist, wobei das leitfähige Filament ein Paar von Enden aufweist, die sich durch den Protektorunterteil und das Gürtelpaket zu der Innenschicht (133) erstrecken, wobei das Paar von Enden in einem entsprechenden Paar von Detektionskontakten endet; und einen Sensor (143), der benachbart zu einer in der radialen Richtung inneren Seite der Innenschicht angebracht ist; wobei der Sensor (143) ein Paar elektrischer Kontakte (156) aufweist; wobei jedes Paar, das aus den Paaren von elektrischen Kontakten ausgewählt ist, elektrisch mit einem entsprechenden Kontakt in Verbindung steht, der aus den Detektionskontakten ausgewählt ist; **dadurch gekennzeichnet, dass** das leitfähige Filament (139) in Form eines wellenförmigen Musters in einer seitlichen Richtung über die Lauffläche (119) angelegt ist.

2. Reifen, der die folgenden Elemente umfasst: ein leitfähiges Filament (139), das in einer Lauffläche (119) des Reifens (103) angebracht ist; wobei das leitfähige Filament (139) sich in der seitlichen Richtung über eine Breite der Lauffläche erstreckt ; wobei ein Paar von Enden sich in der radialen Richtung nach innen durch den Reifen zu einer Innenschicht (133) des Reifens erstreckt; ein Paar von Detektionskontakten, die an dem leitfähigen Filament (139) befestigt sind; wobei jedes Paar von Detektionskontakten an einem jeweiligen Paar von Enden des leitfähigen Filaments befestigt ist ; sowie einen Sensor (143), der angrenzend an eine in der radialen Richtung innere Seite der Innenschicht (133) angebracht ist; wobei der Sensor (143) ein Paar von elektrischen Kontakten (156) aufweist; wobei jedes Paar, das unter den Paaren von elektrischen Kontakten ausgewählt ist, elektrisch mit einem entsprechenden Detektionskontakt verbunden ist, der aus den Detektionskontakten ausgewählt ist; **dadurch gekennzeichnet, dass** das leitfähige Filament (139) in Form eines wellenförmigen Musters in einer seitlichen Richtung über die Lauffläche (119) angelegt ist.

3. Reifen nach Anspruch 1 oder 2, wobei das leitfähige Filament (139) in einer Verschleißtiefe innerhalb der Lauffläche (119) derart angebracht ist, dass das leitfähige Filament gerissen wird, wenn die Lauffläche bis zur Verschleißtiefe verschlissen ist.

4. Reifen nach zumindest einem der vorhergehenden Ansprüche, wobei das leitfähige Filament (139) ein leitfähiges Polymer und/oder eine leitfähige Kohlenstofffaser umfasst.

5. Reifen nach zumindest einem der vorhergehenden Ansprüche, wobei das leitfähige Filament (139) einen Metalldraht umfasst.

6. Reifen nach zumindest einem der vorhergehenden Ansprüche, der ferner einen Schacht (163) umfasst, der sich von dem Protektorunterteil durch zumindest ein Laufflächenelement erstreckt, das aus den oben genannten mehreren Laufflächenelemente ausgewählt ist.

7. Reifen nach zumindest einem der vorhergehenden Ansprüche, wobei der Sensor (143) ein SURD-Sensor ist.

8. Reifen nach zumindest einem der vorhergehenden Ansprüche, wobei Reifen nach zumindest einem der vorhergehenden Ansprüche, wobei die Verschleißtiefe einer zuvor definierten minimalen Laufflächentiefe des Reifens (103) relativ zu einer äußeren Oberfläche der Lauffläche (119) entspricht, so dass das leitfähige Filament gerissen ist, wenn die Lauffläche bis zur Verschleißtiefe verschlissen ist.

9. Reifen zumindest nach einem der vorhergehenden Ansprüche, wobei das leitfähige Filament (139) sich durch die Lauffläche (119) in einer umlaufenden Richtung um den Reifen herum, in einer radialen Richtung durch den Reifen hindurch oder in einer Kombination der beiden Richtungen erstreckt.

10. Verfahren zur Herstellung eines Reifens, wobei das Verfahren Folgendes umfasst:
das Befestigen eines leitfähigen Filaments (139) an einer Karkasse des Reifens, die nicht vulkanisiert worden ist; wobei das leitfähige Filament ein Paar von Enden aufweist, die sich durch die Karkasse des Reifens, die nicht vulkanisiert worden ist, bis zu einer Innenschicht (133) erstrecken, wobei das Paar von Enden in einem entsprechenden Paar von Detektionskontakten endet ;
das Anbringen eines Laufstreifens in Form einer Schicht auf die Karkasse des Reifens, die nicht vulkanisiert wurde, über dem leitfähigen Filament (139); und
das Vulkanisieren der Karkasse des Reifens, die nicht vulkanisiert worden ist, um einen Reifen zu erzielen, der vulkanisiert worden ist.

11. Verfahren nach Anspruch 10, wobei das Befestigen des leitfähigen Filaments (139) an der Karkasse des Reifens, die nicht vulkanisiert worden ist, die Verwendung eines Klebstoffs umfasst; und/oder wobei das Befestigen des leitfähigen Filaments (139) an der der Karkasse des Reifens, die nicht vulkanisiert worden ist, das Einnähen des leitfähigen Filaments (139) in die Karkasse des Reifens, die nicht vulkanisiert worden ist, umfasst.

12. Verfahren nach Anspruch 10 oder 11, wobei es ferner umfasst, dass ein Sensor (143) an der Innenschicht (133) des Reifens, der vulkanisiert worden ist, befestigt wird; wobei der Sensor ein Paar von elektrischen Kontakten (156) aufweist; wobei jedes Paar, das aus den Paaren von elektrischen Kontakten ausgewählt ist, mit einem entsprechenden Kontakt, der aus den Detektionskontakten ausgewählt ist, elektrisch in Verbindung gebracht wird.

13. Verfahren nach zumindest einem der Ansprüche 10 bis 12, wobei es ferner das Stromversorgen des Sensors (143) derart umfasst, dass ein elektrischer Stromfluss von den Detektionskontakten durch das leitfähige Filament (139) erzielt wird.

14. Verfahren nach zumindest einem der Ansprüche 10 bis 12, das ferner das Befestigen einer Anzahl von leitfähigen Filamenten an einer Karkasse des Reifens, die nicht vulkanisiert worden ist, umfasst; wobei das leitfähige Filament, das aus den mehreren leitfähigen Filamenten ausgewählt ist, ein Paar von Enden umfasst, die sich durch die Karkasse des Reifens, die nicht vulkanisiert worden ist, bis zu einer Innenschicht erstrecken; wobei das Paar von Enden in einem Paar von Detektionskontakten endet; wobei optional das Verfahren Folgendes umfasst: das Positionieren der mehreren leitfähigen Filamente in regelmäßigen Abständen um einen Umfang der Karkasse des Reifens, die nicht vulkanisiert worden ist.

## Revendications

1. Bandage qui comprend les éléments ci-après : un calandrage intérieur (133) qui est disposé en position adjacente à un paquet de ceintures ; une gomme de base qui est disposée en position adjacente au paquet de ceintures à l'opposé du calandrage intérieur : une bande de roulement (119) qui est disposée en position adjacente à gomme de base à l'opposé du paquet de ceintures ; dans lequel la bande de roulement (119) comprend les éléments ci-après : un certain nombre d'éléments de bande de roulement ; un filament conducteur (139) qui est disposé dans la direction latérale, au sein de la bande de roulement, dans lequel le filament conducteur possède une paire d'extrémités qui s'étend à travers la gomme de base et le paquet de ceintures jusqu'au calandrage intérieur (133), dans lequel la paire d'extrémités se termine en une paire correspondante de contacts de détection ; ainsi qu'un capteur (143) qui est disposé en position adjacente à un côté interne, dans la direction radiale, du calandrage intérieur ; dans lequel le capteur (143) possède une paire de contacts électriques (156) ; dans lequel chaque paire qui est choisie parmi les paires de contacts électriques est mise en communication par voie électrique avec un contact correspondant qui est choisi parmi les contacts de détection ; **caractérisé en ce que** le filament conducteur (139) est agencé sous la forme d'un motif possédant une configuration de forme ondulée à travers la bande de roulement (119) dans une direction latérale.

2. Bandage qui comprend les éléments ci-après : un filament conducteur (139) qui est disposé dans une bande de roulement (119) du bandage (103) ; dans lequel le filament conducteur (139) s'étend, dans la direction latérale, sur une largeur de la bande de roulement ; dans lequel une paire d'extrémités s'étendent, dans la direction radiale, vers l'intérieur, à travers le bandage jusqu'à un calandrage intérieur (133) du bandage ; une paire de contacts de détection qui sont fixés au filament conducteur (139) ; dans lequel chaque paire de contacts de détection est fixée à une paire respective d'extrémités du filament conducteur ; ainsi qu'un capteur (143) qui est disposé en position adjacente à un côté interne, dans la direction radiale, du calandrage intérieur (133) ;dans lequel le capteur (143) possède une paire de contacts électriques (156) ; dans lequel chaque paire qui est choisie parmi les paires de contacts électriques est mise en communication par voie électrique avec un contact correspondant qui est choisi parmi les contacts de détection ; **caractérisé en ce que** le filament conducteur (139) est agencé sous la forme d'un motif possédant une configuration de forme ondulée à travers la bande de roulement (119) dans une direction latérale.

3. Bandage selon la revendication 1 ou 2, dans lequel le filament conducteur (139) est disposé à une profondeur d'usure au sein de la bande de roulement (119) d'une manière telle que le filament conducteur est rompu lorsque la bande de roulement est usée jusqu'à la profondeur d'usure.

4. Bandage selon au moins une des revendications précédentes, dans lequel le filament conducteur (139) comprend un polymère conducteur et/ou une fibre de carbone conductrice.

5. Bandage selon au moins une des revendications précédentes, dans lequel le filament conducteur (139) comprend un fil métallique.

6. Bandage selon au moins une des revendications précédentes, qui comprend en outre une cheminée (163) qui s'étend à partir de la couche de gomme à travers au moins desdits un ou plusieurs éléments de bande de roulement.

7. Bandage selon au moins une des revendications précédentes, dans lequel le capteur (143) est un capteur SSPP.

8. Bandage selon au moins une des revendications précédentes, dans lequel la profondeur d'usure correspond à une profondeur minimale de bande de roulement du bandage (103), qui a été définie au préalable, par rapport à une surface externe de la bande de roulement (119), tant et si bien que le filament conducteur est rompu lorsque la bande de roulement est usée jusqu'à la profondeur d'usure.

9. Bandage selon au moins une des revendications précédentes, dans lequel le filament conducteur (139) s'étend à travers la bande de roulement (119) dans une direction circonférentielle autour du bandage, dans une direction radiale à travers le bandage, ou dans une combinaison desdites deux directions.

10. Procédé destiné à la confection d'un bandage, dans lequel le procédé comprend le fait de :
fixer un filament conducteur (139) à une carcasse de bandage, qui n'a pas été vulcanisée ; dans lequel le filament conducteur possède une paire d'extrémités qui s'étendent à travers la carcasse de bandage, qui n'a pas été vulcanisée jusqu'à un calandrage intérieur (133), dans lequel la paire d'extrémités se termine en une paire correspondante de contacts de détection ;
disposer en formant une couche une chape de bande de roulement sur la carcasse de bandage, qui n'a pas été vulcanisée, par-dessus le filament conducteur (139) ; et
vulcaniser la carcasse de bandage, qui n'a pas été vulcanisée, dans le but d'obtenir un bandage qui a été vulcanisé.

11. Procédé selon la revendication 10, dans lequel le fait de fixer le filament conducteur (139) à la carcasse de bandage, qui n'a pas été vulcanisée comprend le fait d'utiliser un adhésif ; et/ou dans lequel le fait de fixer le filament conducteur (139) à la carcasse de bandage, qui n'a pas été vulcanisée comprend le fait d'insérer par couture le filament conducteur (139) dans la carcasse de bandage, qui n'a pas été vulcanisée.

12. Procédé selon la revendication 10 ou 11, qui comprend en outre le fait de fixer un capteur (143) au calandrage intérieur (133) du bandage qui a été vulcanisé ; dans lequel le capteur possède une paire de contacts électriques (156) ; dans lequel chaque paire qui est choisie parmi les paires de contacts électriques est mise en communication par voie électrique avec un contact correspondant qui est choisi parmi les contacts de détection.

13. Procédé selon au moins une des revendications 10 à 12, qui comprend en outre le fait d'électrifier le capteur (143) d'une manière telle que l'on obtient une circulation d'un courant électrique à partir des contacts de détection à travers le filament conducteur (139).

14. Procédé selon au moins une des revendications 10 à 12, qui comprend en outre le fait de fixer un certain nombre de filaments conducteurs à une carcasse de bandage, qui n'a pas été vulcanisée ; dans lequel le filament conducteur qui est choisi parmi lesdits plusieurs filaments conducteurs possède une paire d'extrémités qui s'étendent à travers la carcasse de bandage, qui n'a pas été vulcanisée jusqu'à un calandrage intérieur ; dans lequel la paire d'extrémités se termine en une paire de contacts de détection ; dans lequel le procédé comprend en outre, de manière facultative, le fait de positionner lesdits plusieurs filaments conducteurs à des intervalles réguliers autour d'une circonférence de la carcasse de bandage, qui n'a pas été vulcanisée.
